# EUROPÄISCHE PATENTSCHRIFT

(11) **EP 1 514 470 B1**
(45) Veröffentlichungstag und Bekanntmachung des Hinweises auf die Patenterteilung: **15.08.2007**
(21) Anmeldenummer: 04015357.9
(22) Anmeldetag: 30.06.2004
(51) Int. Cl.: A01K 5/00

(54) **Mischwagen**
Feed mixer
Véhicule de distribution de fourrages

(30) Priorität: 09.09.2003 DE 20314002 U
(43) Veröffentlichungstag der Anmeldung: 16.03.2005
(73) Patentinhaber: Trioliet Mullos B.V., 7570 AC Oldenzaal (NL)
(72) Erfinder: Van der Plas, Nicolaas, 7576 WX Oldenzaal (NL)
(74) Vertreter: Grünecker, Kinkeldey, Stockmair & Schwanhäusser Anwaltssozietät

(56) Entgegenhaltungen:
- EP-A- 1 084 612
- DE-U- 29 820 836
- US-A- 5 456 416
- US-A- 5 601 362

## Beschreibung

Die Erfindung bezieht sich auf einen Mischwagen der im Oberbegriff von Anspruch 1 erläuterten Art.

Derartige Mischwagen werden in der Landwirtschaft zum Mischen, Transportieren und Ausgeben von Viehfutter verwendet und sind in großer Zahl auf dem Markt. So zeigt beispielsweise das DE 298 20 836 U1 einen Mischwagen der gattungsgemäßen Art, der ein von einem Schlepper zu ziehendes Fahrgestell aufweist, auf dem ein Behälter mit einer Mischkammer angeordnet ist. Die Mischkammer enthält einen auf dem Fahrgestell ruhenden Boden, eine obere Einfüllöffnung und eine Wandung, die sich vom Boden nach oben erstreckt. Im Inneren der Mischkammer ist ein Arbeitswerkzeug, meist eine um eine senkrechte Achse rotierende, sich von unten nach oben verjüngende Mischschnecke angeordnet. Die Mischschnecke überstreicht einen kreisförmigen Arbeitsbereich am Boden, der in den meisten Fällen relativ klein ist. Um jedoch trotzdem das Fassungsvermögen so weit wie möglich vergrößern zu können, erstreckt sich die Wandung schräg nach oben, so dass die Einfüllöffnung größer als der Boden ist. Andererseits darf jedoch ein Mischwagen quer zur Fahrtrichtung nicht zu ausladend sein, damit er ohne hängenzubleiben durch die Stallgasse oder den Futtergang passt. Es hat sich deshalb bewährt, die Wandung der Mischkammer an den Seiten mit einer senkrecht verlaufenden Abflachung zu versehen, so dass im Wesentlichen nur die vorderen und rückwärtigen Bereiche der Wandung konisch verlaufen. Die Abflachung ist beim bekannten Mischwagen in Fahrtrichtung so breit, dass sie die gesamte Austragsöffnung zum seitlichen Austragen des Futters aufnehmen kann. Die Austragsöffnung wird durch einen Schieber verschlossen, der parallel zur Fahrtrichtung über ein Betätigungsmittel bewegbar ist. Das Betätigungsmittel enthält eine waagrecht angeordnete Kolben-Zylinder-Einheit, die an der seitlichen Kante des Schiebers angreift. Da die Wandung an dieser Stelle jedoch bereits gekrümmt verläuft, steht die Kolben-Zylinder-Einheit nach vorne vor, was die Gefahr von Beschädigungen oder Unfällen heraufbeschwört. Darüber hinaus muss eine derart breite Abflachung, die in der Lage ist, die gesamte Austragsöffnung aufzunehmen, notgedrungen tangential zum Umfang der Arbeitsfläche verlaufen. Dies erfordert einen Boden, der zumindest beidseitig der Austragsöffnung größer ist als die Arbeitsfläche, was zwangsläufig zu sogenannten "toten" Ecken, d.h. zu Bereichen außerhalb des Arbeitskreises der Mischschnecke führt, in denen Futter liegen bleibt.

Aus der EP 1 084 612 A ist ein Mischwagen mit senkrechten, gekrümmten Seitenwänden und einer seitlichen Austragsöffnung bekannt, die jedoch durch eine Schürze abgedeckt werden muss. Die US 5 456 416 zeigt einen Mischwagen mit konischen, gekrümmten Seitenwänden, bei dem die Austragsöffnung schräg nach vom weist.

Der Erfindung liegt somit die Aufgabe zugrunde, einen Mischwagen zu schaffen, der die im Stand der Technik vorhandenen Nachteile überwindet und insbesondere eine bequeme seitliche Ausgabe des Futters mit einer guten Durchmischung verbindet.

Die Aufgabe wird durch die im Anspruch 1 angegebene Erfindung gelöst.

Durch die erfindungsgemäße Ausgestaltung können die Vorteile von seitlich abgeflachten Wandungen und einer seitlich angeordneten Austragsöffnung kombiniert werden, ohne dass Verletzungs- bzw. Beschädigungsgefahr besteht und ohne dass das Mischergebnis durch die konstruktiven Gegebenheiten nachteilig beeinflusst wird. Indem man den Schieber und die sich seitlich von ihm erstreckenden Bereiche der Wandung an die Form des Arbeitsbereiches des Arbeitswerkzeuges anpasst, werden tote Ecken vermieden. Trotzdem kann der Schieber ohne zu klemmen geöffnet werden, wenn man seinen Öffnungs- und Schließweg im Wesentlichen unter dem Neigungswinkel verlaufen lässt, unter dem die Wandungsbereiche neben der Abflachung bzw. der Auftragsöffnung verlaufen.

Vorteilhafte Weiterbildungen der Erfindung sind den Unteransprüchen zu entnehmen.

Ordnet man die Betätigungsmittel so an, dass die Betätigungsrichtung ebenfalls der größeren Neigung folgt, so können problemlos lineare Betätigungsmittel, wie beispielsweise Kolben-Zylinder-Einheiten verwendet werden.

Zweckmäßigerweise wird die Kolben-Zylinder-Einheit an einer Stelle der Wandung angeordnet, die unter dem größeren Neigungswinkel verläuft, so dass sich der Öffnungs- und Schließweg von selbst ergibt, ohne dass Vorkehrungen getroffen werden müssen, den sich beim Hochschieben des Schiebers mehr und mehr öffnenden Spalt zwischen der Oberkante des Schiebers und der Abflachung der Wandung zu überbrücken.

Gemeinsam zu betätigende Kolben-Zylinder-Einheiten, beispielsweise in Form eines Master-Slave-Zylindersatzes, sind besonders bevorzugt, da damit nicht die Gefahr besteht, dass sich der Schieber verkantet.

Ein weiteres bevorzugtes Ausführungsbeispiel eines Betätigungsmittels enthält eine einzige Kolben-Zylinder-Einheit, die über ein Übertragungsmittel, bevorzugt einen doppelarmigen Schwenkhebel, auf den Schieber wirkt.

Ausführungsbeispiele der Erfindung werden nachfolgend anhand der Zeichnungen näher erläutert. Es zeigen:
- Fig. 1: eine schematische, perspektivische Darstellung eines ersten Ausführungsbeispiels eines erfindungsgemäßen Mischwagens,
- Fig. 2: die Seitenansicht des Mischwagens nach Fig. 1,
- Fig. 3: die Vorderansicht des Mischwagens nach Fig. 1, gesehen entgegen Fahrtrichtung,
- Fig. 4: eine herausvergrößerte Einzelheit des Mischwagens gemäß Fig. 3,
- Fig. 5: die Draufsicht auf den Mischwagen gemäß Fig. 1 in geschnittener und vergrößerter Teildarstellung, und
- Fig. 6: eine schematische, perspektivische Teildarstellung eines zweiten Ausführungsbeispiels eines erfindungsgemäßen Mischwagens.

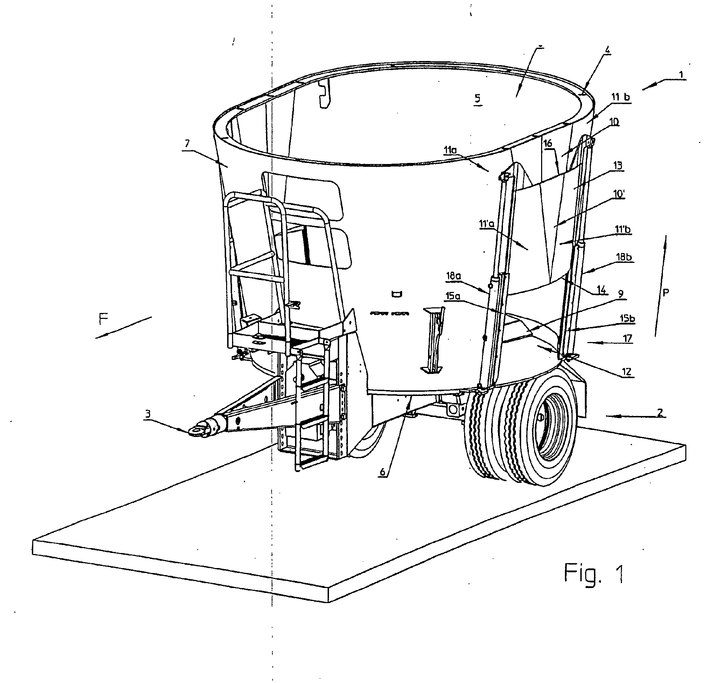

Die Fig. 1 bis 5 zeigen in schematischer Darstellung ein erstes Ausführungsbeispiel eines Mischwagens 1 für Viehfutter, der in üblicher Weise ein Fahrgestell 2 aufweist, das über eine Kupplung 3 an einem Schlepper oder einem ähnlichen Zugfahrzeug angehängt werden kann und mit dessen Hilfe in der Stallgasse oder entlang eines Futterganges in Fahrtrichtung F verfahren werden kann.

Der Mischwagen 1 umfasst einen Mischbehälter 4, der eine Mischkammer 5 umschließt. Der Mischbehälter 4 enthält einen Boden 6 und eine Wandung 7, die sich vom Boden 6 nach oben erstreckt und eine Einfüllöffnung 8 freilässt, durch die das Futter in die Mischkammer 5 eingefüllt wird.

Im Inneren der Mischkammer 5 ist ein Arbeitswerkzeug 9 zum Mischen und Austragen des Futters vorgesehen. Das Arbeitswerkzeug 9 ist bevorzugt eine Mischschnecke, die beim Verfahren des Mischwagens 1 um eine senkrechte Achse drehend angetrieben wird und einen nach oben hin schmaler werdenden Schneckengang aufweist. Das Arbeitswerkzeug 9 überstreicht demzufolge eine kreisförmige Arbeitsfläche A auf dem Boden 6. Damit im Wesentlichen das gesamte Futter durchgemischt werden kann, ist auch der Boden 6 in seiner Größe und Form an die Arbeitsfläche angepasst, d.h. der Boden 6 ist im wesentlichen kreisförmig und gleich bzw. nur geringfügig größer als die Arbeitsfläche A. Da die Arbeitswerkzeuge 9 nur so groß sein müssen, dass sie ein optimales Mischungsergebnis bieten, wird das Fassungsvermögen der Mischkammer 5 dadurch vergrößert, dass man die Wandung 7 konisch nach oben außen laufen lässt, so dass die Einfüllöffnung 8 größer ist als der Boden 6. Um dadurch jedoch die Breite des Mischbehälters 4 und des Mischwagens 1 nicht übermäßig zu erhöhen, enthält die Wandung 7 eine Abflachung 10, symmetrisch an beiden Seiten des Behälters 4 und sich quer zur Fahrtrichtung F diametral gegenüberliegend. Die Abflachung 10 ist im dargestellten Ausführungsbeispiel ein im Wesentlichen dreieckförmiges flaches bzw. flach gekrümmtes Teil, das sich von der Einfüllöffnung 8 bis zum Boden 6 erstreckt, den Boden 6 jedoch nur im Wesentlichen punktförmig und tangential berührt. Beidseitig der Abflachung 10 befinden sich gekrümmte Bereiche 11a und 11b der Wandung 7. Die Abflachung 10 kann sowohl vollständig eben oder gekrümmt sein, dann jedoch mit einem Krümmungsradius der wesentlich größer ist als der Krümmungsradius der gekrümmten Bereiche 10a, 10b.

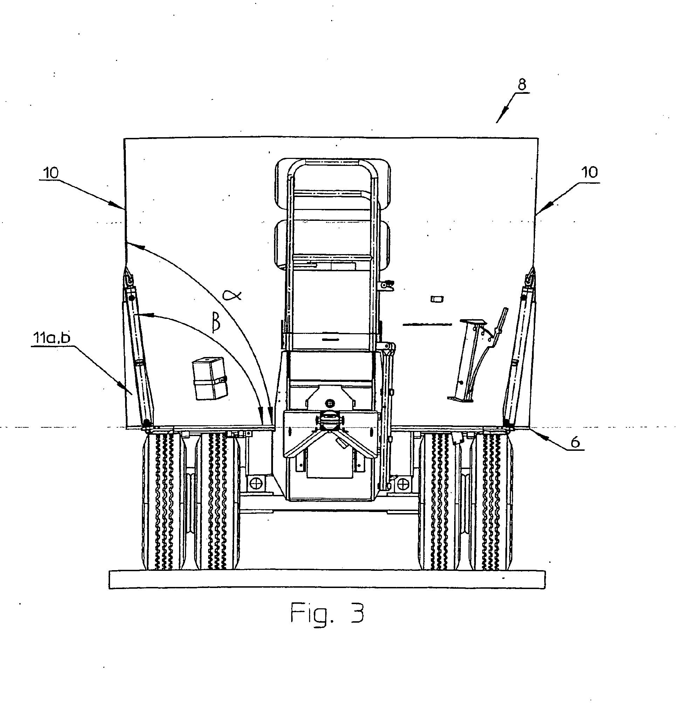

Die Abflachung 10 weist, wie insbesondere aus Fig. 3 zu sehen, mit dem Boden 6 einen Neigungswinkel α auf, der kleiner ist als ein zweiter, größerer Neigungswinkel β, den die gekrümmten Bereiche 11a, 11b mit dem Boden 6 einschließen, wobei der zweite Neigungswinkel β sich mit zunehmendem Abstand von der Abflachung 10 in Umfangsrichtung stetig oder in Stufen vergrößern kann. Bevorzugt beträgt der Neigungswinkel α etwa 90°, d.h. die Abflachung 10 steht etwa senkrecht zum Boden 6; der Neigungswinkel α kann jedoch auch bis 98° betragen, ist jedoch immer kleiner als der Neigungswinkel β.

Die Wandung 7 des Mischwagens 1 ist an wenigstens einer, bevorzugt an beiden Seiten mit einer Austragsöffnung 12 versehen. Die Austragsöffnung 12 ist im unteren Bereich der Wandung 7 vorgesehen und schließt sich bevorzugt schwellenlos an den Boden 6 an. Im dargestellten Ausführungsbeispiel ist die Austragsöffnung 12 rechtwinklig und erstreckt sich symmetrisch beiderseits der Abflachung 10 in die gekrümmten Bereiche 11a, 11b. Die Austragsöffnung 12 ist durch einen Schieber 13 verschließbar, der in Form und Größe an die Austragsöffnung 12 angepasst ist und der im Wesentlichen in Form und Größe demjenigen Stück der Wandung 7 entspricht, das zum Ausbilden der Austragsöffnung 12 entfernt wurde. Der Schieber 13 enthält somit ein Teilstück 10' der Abflachung 10 und Teilstücke 11'a bzw. 11'b der gekrümmten Bereiche 11 a, 11 b.

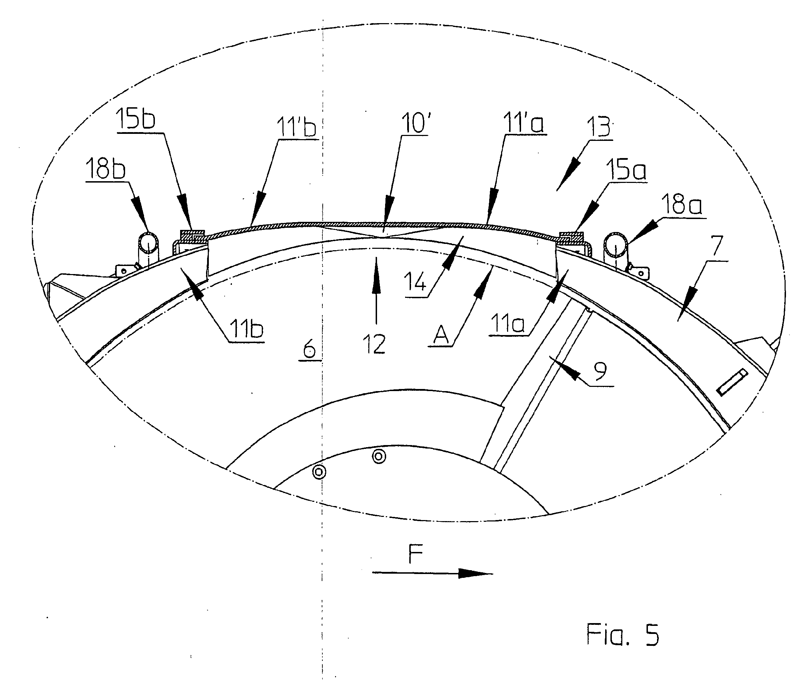

Der Schieber 13 weist eine Unterkante 14 auf, an der der Schieber 13 an die Form des Umfangs des Arbeitskreises des Arbeitswerkzeuges 9 angepasst ist, d.h. die Unterkante 14 ist kreisbogenförmig um die Drehachse des Arbeitswerkzeuges 9 gekrümmt. In gleicher Weise sind die sich beidseitig der Austragsöffnung 12 befindenden gekrümmten Bereiche 11a, 11b in der Nähe des Bodens 6 an den Umfang der Arbeitsfläche angepasst. Mit zunehmendem Abstand zum Boden 6 bzw. zur Austragsöffnung 12 ist eine derartige Anpassung an die Form der Arbeitsfläche nicht mehr notwendig, so dass der Krümmungsradius bzw. die Neigung der Wandung im Hinblick auf ein größeres Fassungsvermögen optimiert, insbesondere vergrößert, werden können, wie dies Fig. 5 beispielhaft zeigt.

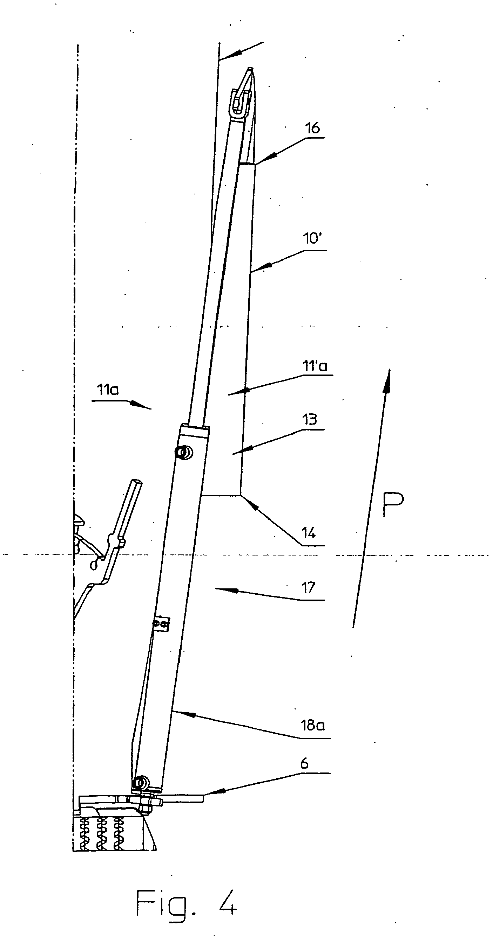

Der Schieber 13 ist mit seinen Seitenkanten in Führungen in Form von Führungsleisten 15a, 15b aufgenommen, die beidseitig der Austragsöffnung 12 an den gekrümmten Bereichen 11a, 11b angeordnet sind, die sich unter dem größeren Neigungswinkel β erstrecken, so dass auch die Führungsleisten 15a, 15b unter diesem beidseitig der Austragsöffnung 12 vorhandenen, bzw. den Seitenkanten des Schiebers 13 gegenüberliegenden, größeren Neigungswinkel β verlaufen. Dadurch wird ein im Wesentlichen unter dem größeren Neigungswinkel β verlaufender Öffnungs- und Schließweg P geschaffen, über den der Schieber ungehindert zum Öffnen und Schließen der Austragsöffnung 12 bewegt werden kann. Dabei bewegt sich seine Oberkante 16 in einen zunehmend größer werdenden, seitlichen Abstand zur Abflachung 10, ohne dass jedoch die seitliche Ausladung des Mischwagens 1 unangemessen vergrößert wird, wie dies Fig. 4 beispielhaft zeigt.

Der Schieber 13 wird durch ein Betätigungsmittel 17 bewegt, das bevorzugt wenigstens eine Kolben-Zylinder-Einheit enthält. Im ersten Ausführungsbeispiel gemäß den Fig. 1 bis 5 enthält das Betätigungsmittel 17 zwei gemeinsam betätigbare Kolben-Zylinder-Einheiten 18a und 18b, die parallel zu den Führungen 15a und 15b angeordnet sind, d.h. eine Betätigungsrichtung aufweisen, die ebenfalls unter dem Neigungswinkel β verläuft. Die Kolben-Zylinder-Einheiten 18a, 18b befinden sich mit ihren Zylindern neben der Austragsöffnung 12 und greifen mit ihren Kolbenstangen an der Oberkante 16 des Schiebers 13 an.

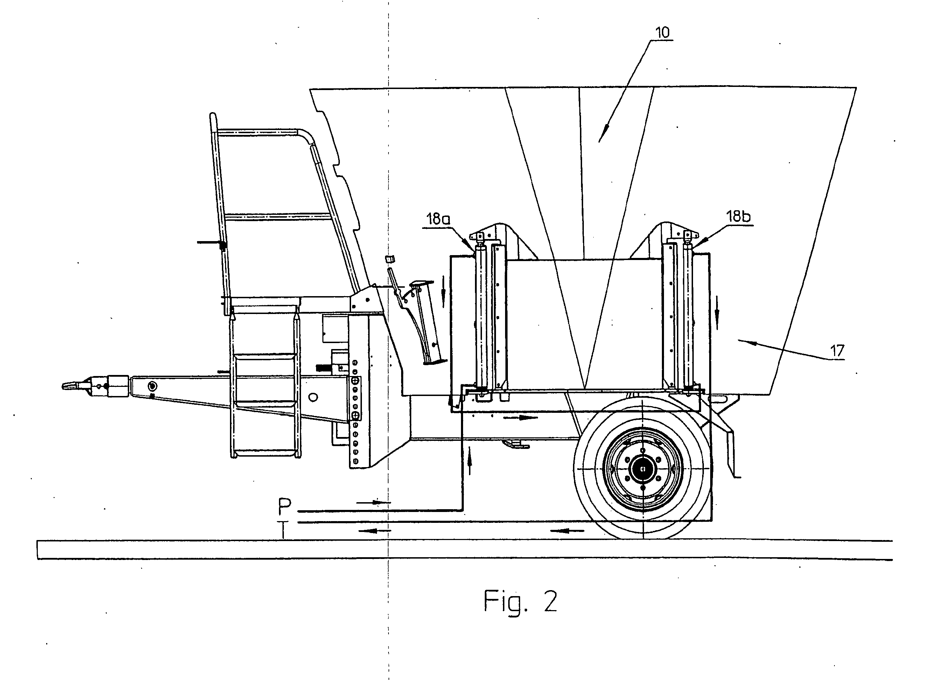

Bevorzugt wird ein Master-Slave-Zylindersatz eingesetzt, der, wie Fig. 2 zeigt, in Abhängigkeit voneinander betätigt wird, wobei die Kolben-Zylinder-Einheit 18a die Betätigung der Kolben-Zylinder-Einheit 18b übernimmt. Auf diese Weise wird verhindert, dass z.B. der Schieber 13 beim Schließen schräg gedrückt wird, wenn beispielsweise Futter in die Führungsleiste bzw. unter den Schieber gelangt.

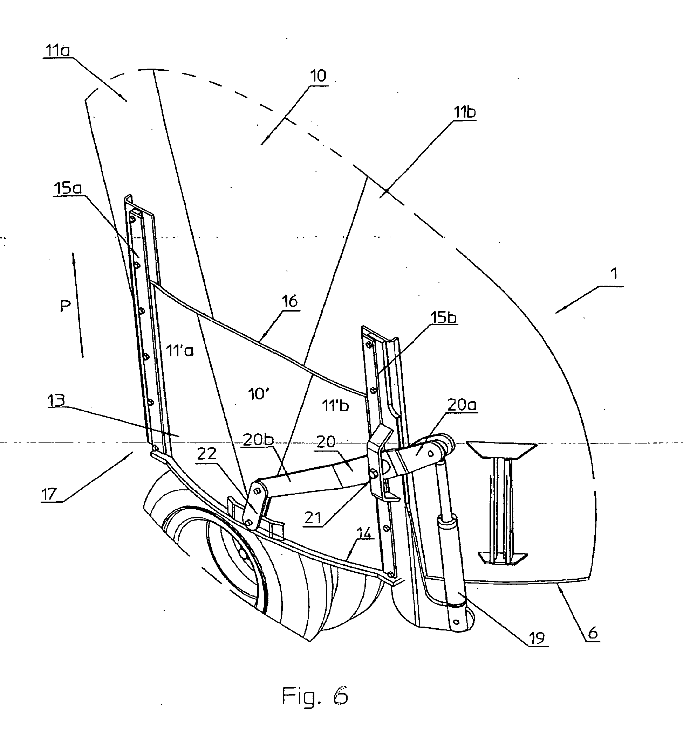

Fig. 6 zeigt ein weiteres Ausführungsbeispiel eines erfindungsgemäßen Mischwagens 1, das bis auf die Ausgestaltung der Betätigungsmittel 17 für die Bewegung des Schiebers 13 dem Ausführungsbeispiel der Fig. 1 bis 5 entspricht, so dass gleiche bzw. vergleichbare Bauteile mit den gleichen Bezugszeichens gekennzeichnet und nicht nochmals erläutert sind.

Die Betätigungsmittel der Fig. 6 weisen eine einzige Kolben-Zylinder-Einheit 19 auf, die ebenfalls so angeordnet ist, dass ihre Betätigungsrichtung dem größeren Neigungswinkel β folgt. Auch die Kolben-Zylinder-Einheit 19 ist neben dem Schieber 13 und im Wesentlichen parallel zur Führung 15b bzw. 15a angeordnet. Die Einheit 19 beaufschlagt ein Hebelgestänge mit einer Schwenkstange 20, die um eine sich senkrecht zum gekrümmten Bereich 11b erstreckende Schwenkachse 21 so schwenkbar gelagert ist, dass an einem ihrer Arme 20a die Einheit 19 eingreifen kann und ihr anderer Arm 20b, über ein schwenkbares Zwischenstück 22 an oder in der Nähe der Unterkante 14 des Schiebers 13 angreift. Es ist jedoch auch ein Angriff an oder in der Nähe der Oberkante 16 denkbar. Wird die Einheit 19 eingefahren, so wird der Schieber 13 in den Führungen 15a, 15b nach oben entlang des Öffnungs- und Schließweges P verschoben, der auch bei diesem Ausführungsbeispiel unter dem Neigungswinkel β verläuft.

In Abwandlung des beschriebenen und gezeichneten Ausführungsbeispiels können andere, geeignete Betätigungsmittel vorgesehen sein, die sich zum Hochschieben des Schiebers eignen. Die Form der Abflachung kann ebenso verändert werden, wie die Form des Behälter. Schließlich kann der Öffnungs und Schließweg auch unter einem größeren Neigungswinkel verlaufen als die Wandung an der Austragsöffnung; auch ein geringfügig kleinerer Winkel ist denkbar, solange sich der Schieber noch vollständig öffnen lässt.

## Patentansprüche

1. Mischwagen (1) mit einer Mischkammer (5), die einen Boden (6), eine Einfüllöffnung (8), die größer als der Boden (6) ist, und eine Wandung (7) aufweist, wobei in der Mischkammer (5) ein Arbeitswerkzeug (9) vorgesehen ist, das eine Arbeitsfläche (A) auf dem Boden (6) überstreicht, wobei die Wandung (7) an ihrer Seite eine von gekrümmten Bereichen (11a, 11b) begrenzte Abflachung (10) aufweist, wobei der Abflachung (10) eine Austragsöffnung (12) zugeordnet ist, die durch einen mit Hilfe eines Betätigungsmittels (17) in einem Öffnungs- und Schließweg (P) bewegbaren Schieber (13) verschließbar ist, und wobei die Abflachung (10) mit dem Boden (6) einen ersten Neigungswinkel (α) einschließt, der kleiner ist als ein zweiter, größerer Neigungswinkel (β), den der gekrümmte Bereich (11a, 11b) mit dem Boden (6) einschließt, **dadurch gekennzeichnet, dass** in der Nähe des Bodens (6) der Schieber (13) und der gekrümmte Bereich (11a, 11b) der Wandung (7) an der Austragsöffnung (12) der Form des Umfangs der Arbeitsfläche (A) folgen und dass der Öffnungs- und Schließweg (P) unter einem Winkel verläuft, der gleich oder größer als der größere Neigungswinkel (β) ist.

2. Mischwagen nach Anspruch 1, **dadurch gekennzeichnet, dass** das Betätigungsmittel (17) wenigstens eine Kolben-Zylinder-Einheit (18,19) aufweist, deren Betätigungsrichtung entlang des größeren Neigungswinkels (β) verläuft.

3. Mischwagen nach Anspruch 2, **dadurch gekennzeichnet, dass** die Kolben-Zylinder-Einheit (18, 19) neben der Austragsöffnung (12) am gekrümmten Bereich (11a, 11b) der Wandung (7) angeordnet ist.

4. Mischwagen nach Anspruch 2 oder 3, **dadurch gekennzeichnet, dass** zwei gemeinsam betätigbare, am Schieber (13) angreifende Kolben-Zylinder-Einheiten (18a, 18b) vorgesehen sind.

5. Mischwagen nach Anspruch 4, **gekennzeichnet durch** einen Master-Slave-Zylindersatz.

6. Mischwagen nach Anspruch 2 oder 3, **dadurch gekennzeichnet, dass** eine Kolben-Zylinder-Einheit (19) vorgesehen ist, die über ein Übertragungsmittel (20) am Schieber (13) angreift.

7. Mischwagen nach Anspruch 6, **dadurch gekennzeichnet, dass** das Übertragungsmittel (20) eine um eine Achse (21) schwenkbare Stange mit zwei Armen (20a, 20b) enthält, wobei ein Arm (20b) am Schieber (13) angreift und der andere Arm (20a) mit der Kolben-Zylinder-Einheit (19) verbunden ist.

8. Mischwagen nach einem der Ansprüche 1 bis 7, **dadurch gekennzeichnet, dass** die Abflachung (10) zum Boden (6) rechtwinklig verläuft.

9. Mischwagen nach einem der Ansprüche 1 bis 8, **dadurch gekennzeichnet, dass** die Abflachung (10) am Boden (6) punktförmig beginnt und sich in Richtung der Einfüllöffnung (8) verbreitert.

10. Mischwagen nach einem der Ansprüche 1 bis 9, **dadurch gekennzeichnet, dass** der Schieber (13) einen Teil (10', 11'a, 11'b) der Abflachung (10) und des gekrümmten Bereichs (11 a, 11 b) besitzt.

11. Mischwagen nach einem der Ansprüche 1 bis 10, **dadurch gekennzeichnet, dass** der Schieber (13) der Form der Wandung (7) folgt.

12. Mischwagen nach einem der Ansprüche 1 bis 11, **dadurch gekennzeichnet, dass** der Schieber (13) symmetrisch bezüglich der Abflachung (10) ausgebildet ist.

13. Mischwagen nach einem der Ansprüche 1 bis 12, **dadurch gekennzeichnet, dass** der Schieber (13) parallel zum Öffnungs- und Schließweg (P) verlaufende Seitenkanten aufweist, die in Führungen (15a, 15b) aufgenommen sind.

14. Mischwagen nach einem der Ansprüche 1 bis 13, **dadurch gekennzeichnet, dass** der Öffnungs- und Schließweg (P) im Wesentlichen von oben nach unten verläuft.

## Claims

1. A mixer wagon (1) comprising a mixing chamber (5) having a bottom (6), a fill opening (8) greater than the bottom (6), and a wall (7), a work tool (9) being provided in the mixing chamber (5) for sweeping over a work area (A) on the bottom (6), the wall (7) being provided at its side with a flattening (10) defined by curved portions (11a, 11b), the flattening (10) having assigned thereto a discharge opening . (12) which is closable by a slide (13) that is movable with the help of an actuating means (17) in an opening and closing path (P), and the flattening (10) enclosing with the bottom (6) a first inclination angle (α) that is smaller than a second larger inclination angle (β) enclosed by the curved portion (11 a, 11 b) with the bottom (6), **characterized in that** in the vicinity of the bottom (6) the slide (13) and the curved portion (11a, 11b) of the wall (7) on the discharge opening (12) follow the shape of the circumference of the work area (A), and that the opening and closing path (P) extends at an angle that is equal to or larger than the larger inclination angle (β).

2. The mixer wagon according to claim 1, **characterized in that** the actuating means (17) comprises at least one piston-cylinder unit (18, 19) whose actuation direction extends along the larger inclination angle (β).

3. The mixer wagon according to claim 2, **characterized in that** the piston-cylinder unit (18, 19) is arranged next to the discharge opening (12) on the curved portion (11a, 11b) of the wall (7).

4. The mixer wagon according to claim 2 or 3, **characterized in that** two jointly operable piston-cylinder units (18a, 18b) are provided that act on the slide (13).

5. The mixer wagon according to claim 4, **characterized by** a master-slave cylinder set.

6. The mixer wagon according to claim 2 or 3, **characterized in that** a piston-cylinder unit (19) is provided that acts on the slide (13) via a transmission means (20).

7. The mixer wagon according to claim 6, **characterized in that** the transmission means (20) contains a rod which is pivotable about an axis (21) and includes two arms (20a, 20b), one arm (20b) acting on the slide (13) and the other arm (20a) being connected to the piston-cylinder unit (19).

8. The mixer wagon according to any one of claims 1 to 7, **characterized in that** the flattening (10) extends at a right angle relative to the bottom (6).

9. The mixer wagon according to any one of claims 1 to 8, **characterized in that** said flattening (10) begins at the bottom (6) at a point and is enlarged towards the fill opening (8).

10. The mixer wagon according to any one of claims 1 to 9, **characterized in that** the slide (13) possesses a part (10', 11'a, 11'b) of said flattening (10) and of said curved portion (11 a, 11 b).

11. The mixer wagon according to any one of claims 1 to 10, **characterized in that** the slide (13) follows the shape of the wall (7).

12. The mixer wagon according to any one of claims 1 to 11, **characterized in that** the slide (13) is made in symmetry with respect to the flattening (10).

13. The mixer wagon according to any one of claims 1 to 12, **characterized in that** the slide (13) comprises side edges extending in parallel with the opening and closing path (P), which are accommodated in guides (15a, 15b).

14. The mixer wagon according to any one of claims 1 to 13, **characterized in that** the opening and closing path (P) extends essentially from the top to the bottom.

## Revendications

1. Wagon de mélange (1) comprenant un compartiment de mélange (5) qui présente un plancher (6), une ouverture de chargement (8) plus grande que le plancher (6) et une paroi (7), un outil de travail (9), qui balaye une surface de travail (A) sur le plancher (6), étant prévu dans le compartiment de mélange (5), la paroi (7) présentant sur son côté un méplat (10) délimité par des zones cintrées (11a, 11b), lequel méplat (10) est associé à une ouverture de décharge (12) qui peut être fermée par un tiroir (13) mobile à l'aide d'un moyen de commande (17) dans une trajectoire d'ouverture et de fermeture (P), et le méplat (10) formant avec le plancher (6) un premier angle d'inclinaison (α) plus petit qu'un second angle d'inclinaison (β) plus grand, que forme la zone cintrée (11a, 11b) avec le plancher (6), **caractérisé en ce que,** au voisinage du plancher (6), le tiroir (13) et la zone cintrée (11a, 11b) de la paroi (7) sur l'ouverture de décharge (12) suivent la forme de la circonférence de la surface de travail (A), et que la trajectoire d'ouverture et de fermeture (P) s'étend sous un angle qui est égal ou supérieur à l'angle d'inclinaison (β) plus grand.

2. Wagon de mélange suivant la revendication 1, **caractérisé en ce que** le moyen de commande (17) comporte au moins un ensemble cylindre - piston (18, 19), dont la direction d'actionnement s'étend le long de l'angle d'inclinaison (β) le plus grand.

3. Wagon de mélange suivant la revendication 2, **caractérisé en ce que** l'ensemble cylindre - piston (18, 19) est disposé à côté de l'ouverture de décharge (12) sur la zone cintrée (11a, 11b) de la paroi (7).

4. Wagon de mélange suivant l'une des revendications 2 et 3, **caractérisé en ce que** deux ensembles cylindres - pistons (18a, 18b), actionnables conjointement et agissant sur le tiroir (13), sont prévus.

5. Wagon de mélange suivant la revendication 4, **caractérisé par** un jeu de cylindres maître - esclave.

6. Wagon de mélange suivant l'une des revendications 2 et 3, **caractérisé en ce qu'**il est prévu un ensemble cylindre - piston (19) qui agit sur le tiroir (13) par l'intermédiaire d'un moyen de transmission (20).

7. Wagon de mélange suivant la revendication 6, **caractérisé en ce que** le moyen de transmission (20) comporte une barre pivotante autour d'un axe (21) avec deux bras (20a, 20b), un bras (20b) agissant sur le tiroir (13) et l'autre bras (20a) étant relié à l'ensemble cylindre - piston (19).

8. Wagon de mélange suivant l'une des revendications 1 à 7, **caractérisé en ce que** le méplat (10) s'étend perpendiculairement au plancher (6).

9. Wagon de mélange suivant l'une des revendications 1 à 8, **caractérisé en ce que** le méplat (10) commence ponctuellement sur le plancher (6) et s'élargit en direction de l'ouverture de chargement (8).

10. Wagon de mélange suivant l'une des revendications 1 à 9, **caractérisé en ce que** le tiroir (13) comporte une partie (10', 11'a, 11'b) du méplat (10) et de la zone cintrée (11a, 11b).

11. Wagon de mélange suivant l'une des revendications 1 à 10, **caractérisé en ce que** le tiroir (13) suit la forme de la paroi (7).

12. Wagon de mélange suivant l'une des revendications 1 à 11, **caractérisé en ce que** le tiroir (13) a une configuration symétrique par rapport au méplat (10).

13. Wagon de mélange suivant l'une des revendications 1 à 12, **caractérisé en ce que** le tiroir (13) présente des bords latéraux qui s'étendent parallèlement à la trajectoire d'ouverture et de fermeture (P) et sont logés dans des glissières (15a, 15b).

14 . Wagon de mélange suivant l'une des revendications 1 à 13, **caractérisé en ce que** la trajectoire d'ouverture et de fermeture (P) s'étend essentiellement du haut vers le bas.
